# EUROPÄISCHE PATENTSCHRIFT

(11) **EP 1 099 067 B1**
(45) Veröffentlichungstag und Bekanntmachung des Hinweises auf die Patenterteilung: **27.02.2002**
(21) Anmeldenummer: 99936596.8
(22) Anmeldetag: 23.07.1999
(51) Int. Cl.: F16H 63/48, B60T 1/00

(54) **PARKSPERRE, INSBESONDERE FÜR AUTOMATISCHE GETRIEBE VON KRAFTFAHRZEUGEN**
PARKING BRAKE, NOTABLY FOR AUTOMATIC TRANSMISSION SYSTEMS OF MOTOR VEHICLES
FREIN DE STATIONNEMENT POUR BOITES AUTOMATIQUES DE VEHICULES AUTOMOBILES

(30) Priorität: 29.07.1998 DE 19834156
(43) Veröffentlichungstag der Anmeldung: 16.05.2001
(73) Patentinhaber: ZF FRIEDRICHSHAFEN Aktiengesellschaft, 88038 Friedrichshafen (DE)
(72) Erfinder: GIERER, Georg, D-88079 Kressbronn (DE); RÜHRINGER, Uwe, D-88069 Tettnang (DE); MITTELBERGER, Jürgen, D-88138 Wei ensberg (DE)
(86) Internationale Anmeldenummer: EP9905268
(87) Internationale Veröffentlichungsnummer: WO0006928

(56) Entgegenhaltungen:
- EP-A- 0 356 769
- DE-A- 19 643 812
- US-A- 2 974 752
- US-A- 5 048 656

## Beschreibung

Die Erfindung betrifft eine Parksperre für ein automatisches Getriebe nach dem Oberbegriff des Hauptanspruchs.

Die DE 196 25 019 beschreibt eine Parksperre für automatische Getriebe von Kraftfahrzeugen, die dadurch eingelegt wird, indem eine Kolbenstange eines Federspeichers verschoben wird, an dessen Ende eine Sperrklinke angebracht ist, die in ein Parkzahnrad eingreift. Indem der Federspeicher mit hydraulischem Druck beaufschlagt wird, bewegt sich die Kolbenstange in die entgegengesetzte Richtung und die Sperrklinke wird aus dem Parkzahnrad ausgerastet. Die Parksperre kann im ausgerasteten Zustand über einen Haltemagnet gehalten werden, der die Aufgabe hat, ein ungewolltes Einlegen der Parksperre zu verhindern, welches z. B. durch Ausfall des hydraulischen Druckes, indem der Verbrennungsmotor während der Fahrt abgeschaltet wird, der Fall sein kann. Der Magnet muß dergestalt beschaffen sein, daß die Haltekraft des Magneten größer ist als die Federkraft des Federspeichers, damit bei Ausfall der Hydraulik die Parksperre nicht eingerastet werden kann. Für diese Haltekräfte hat der Magnet eine sehr große Leistungsaufnahme. Dadurch könnte es bei abgeschaltetem Verbrennungsmotor und bestromtem Magneten zur ungewollten Entladung der Fahrzeugbatterie kommen.

Der vorliegenden Erfindung liegt die Aufgabe zugrunde, eine Parksperre zu schaffen, welche sich dadurch auszeichnet, daß bei abgeschaltetem Hydraulikdruck die Parksperre längere Zeit ausgerastet bleiben kann.

Die Aufgabe wird erfindungsgemäß mit den kennzeichnenden Merkmalen des Anspruchs 1 gelöst. Weitere Ausgestaltungen der Erfindung ergeben sich aus den Unteransprüchen.

Nach der Erfindung wird eine durch den hydraulischen Druck ausgerastete Parksperre durch eine Verriegelung gehalten, welche durch Bestromen eines Elektromagneten betätigt wird. Indem der Elektromagnet bestromt wird, bewegt sich ein Bolzen des Elektromagneten entgegen einer Federkraft in axialer Richtung. Der Bolzen weist drei Bereiche auf:
- einen ersten zylindrischen Bereich mit kleinerem Durchmesser,
- einen zweiten konischen Bereich, der den ersten und den dritten Bereich miteinander verbindet und
- einen dritten Bereich mit größerem zylindrischen Durchmesser.

Im stromlosen Zustand des Magneten wird der Bolzen durch die Federkraft in der einen Endlage gehalten und die Verriegelungselemente befinden sich auf dem ersten Bereich des Bolzens, welcher einen kleinen Durchmesser aufweist. Die Verriegelungselemente sind in diesem Zustand ausgerastet und der Kolben des Federspeichers kann sich bewegen. Wird der Magnet bestromt, bewegt sich der Bolzen aus seiner ersten Endlage in die zweite Endlage. Die Verriegelungselemente werden von dem zweiten konischen Bereich nach außen gedrückt und rasten in einer Ausnehmung eines feststehenden Teiles der Parksperre ein und verbindet den Kolben des Federspeichers mit dem feststehenden Teil. Um die Verriegelungselemente zu verschieben, benötigt der Magnet eine größere Leistungsaufnahme. Ist der Bolzen in seiner zweiten Endlage, befinden sich die Verriegeiungselemente auf dem dritten zylindrischen Bereich des Bolzens. Die Verriegelungselemente erzeugen auf dem zylindrischen Bereich des Bolzens reine Radialkräfte und der Bolzen muß vom Magnet nur, entgegen der Federkraft des Magneten, in dieser Stellung gehalten werden. Die Leistungsaufnahme des Magneten in dieser Stellung ist sehr gering, so daß bei stehendem Fahrzeugmotor dieser Zustand über einen längeren Zeitraum aufrechterhalten werden kann, ohne daß die Fahrzeugbatterie sich unzulässig schnell entladet. Indem die Verriegelungselemente den Kolben des Federspeichers mit einem feststehenden Teil des Federspeichers formschlüssig verbinden, kann sich der Kolben bei fehlendem Hydraulikdruck nicht durch die Kraft der Feder des Federspeichers bewegen und somit die Sperrklinke nicht in das Parkzahnrad eingreifen. Die Parksperre bleibt in diesem Zustand wirksam entriegelt. Indem der Magnet stromlos geschaltet wird, drückt die Feder des Magneten den Bolzen in seine erste Ausgangslage zurück und die Verriegelungselemente werden nach innen gedrückt, so daß der Kolben des Federspeichers wieder frei beweglich ist und die Sperrklinke in das Parkzahnrad eingreifen kann. In einer bevorzugten Ausführung bestehen die Verriegelungselemente aus mindestens einer oder mehreren Kugel(n), die sich durch Verschieben des Bolzens im Kolben des Federspeichers nach außen bewegen und in eine Ausnehmung des feststehenden Teils des Federspeichers eingreifen. Durch Verwendung von Kugeln als Verriegelungselemente kann die Leistungsaufnahme des Magneten für das Bewegen des Bolzens nochmals reduziert werden, da durch die Punktberührung der Kugeln eine geringere Verschiebekraft benötigt wird. Ein bevorzugtes Ausführungsbeispiel der Erfindung ist in der nachfolgenden Beschreibung mit der zugehörigen Zeichnung dargestellt.

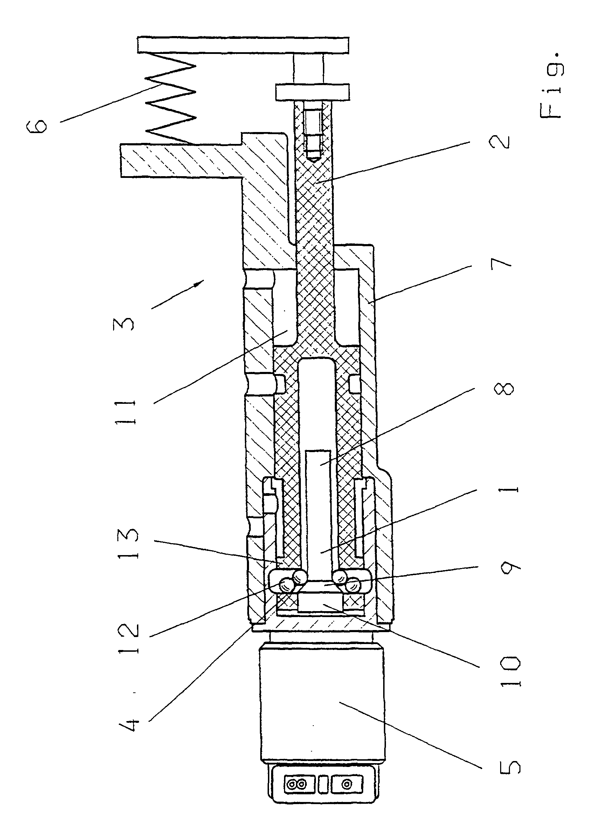

Die einzige Figur zeigt einen Federspeicher 3 für automatische Getriebe von Kraftfahrzeugen, welcher aus einem Kolben 2, einer Feder 6 und einem feststehenden Teil 7 besteht. An dem feststehenden Teil 7 ist ein Elektromagnet 5 befestigt, welcher aus einer nicht dargestellten Feder und einem Bolzen 1 besteht. Der Bolzen 1 ist in drei Bereiche aufgeteilt:
- einen ersten zylindrischen Bereich 8,
- einen zweiten konischen Bereich 9 und
- einen dritten zylindrischen Bereich 10.

Ist der Magnet 5 stromlos, so befindet sich der Bolzen 1 in der Stellung, in der sich die Verriegelungselemente 4 auf dem ersten Bereich 8 befinden. In dieser Stellung befinden sich die Verriegelungselemente 4 innerhalb des Kolbens 2, so daß der Kolben 2 in axialer Richtung frei beweglich ist. An dem Kolben 2 sind nicht dargestellte Verbindungselemente und eine Sperrklinke befestigt, welche durch Verschieben des Kolbens 2 durch die Feder 6 in ein nicht dargestelltes Parkzahnrad eingreift. Durch Aufbringen eines hydraulischen Druckes in einen Kolbenraum 11 wird der Kolben 2 in die entgegengesetzte Endlage gegen die Federkraft der Feder 6 gedrückt und die Sperrklinke gibt das Parkzahnrad frei. In diesem Zustand kann der Magnet 5 bestromt werden und der Bolzen 1 bewegt sich in axialer Richtung. Dabei werden die Verriegelungselemente 4 durch den konischen zweiten Bereich nach außen gedrückt und verriegeln den Kolben 2, indem sie in eine Ausnehmung 12 des feststehenden Teils 7 des Federspeichers 3 eingreifen. Der Bolzen 1 wird in axialer Richtung bis zu seinem Endanschlag bewegt, bis der zylindrische dritte Bereich 10 die Verriegelungselemente 4 daran hindert, in deren Ausgangsposition zurückzukehren. Indem sich die Verriegelungselemente 4 nur in radialer Richtung bewegen können und der dritte Bereich 10 ein zylindrischer Bereich ist, werden auf den Bolzen 1 nur Radialkräfte ausgeübt, so daß die Haltekraft des Magneten 5 und somit die Leistungsaufnahme in dieser Position erheblich reduziert wird. Fällt der hydraulische Druck im Kolbenraum 11, indem der Verbrennungsmotor des Kraftfahrzeugs abgeschaltet wird, so kann die Federkraft der Feder 6 die Parksperre nicht aktivieren, da die Verriegelungselemente 4 den Kolben 2 so lange in seiner Position halten, bis der Magnet 5 stromlos geschaltet wird. Ist die Parksperre über die Federkraft der Feder 6 aktiviert, kann sie durch alleiniges Bestromen des Magneten 5 nicht deaktiviert werden.

### Bezugszeichen

- 1: Bolzen
- 2: Kolben
- 3: Federspeicher
- 4: Verriegelungselement
- 5: Magnet
- 6: Feder
- 7: feststehendes Teil
- 8: erster Bereich
- 9: zweiter Bereich
- 10: dritter Bereich
- 11: Kolbenraum
- 12: Ausnehmung
- 13: Verriegelung

## Patentansprüche

1. Parksperre für automatische Getriebe von Kraftfahrzeugen, die aufgrund eines über eine Bedieneinrichtung ausgelösten Betätigungssignals das automatische Getriebe blokkiert bzw. freigibt, indem eine Sperrklinke in ein Parkzahnrad auf einer Welle des automatischen Getriebes einbzw. ausrastet, wobei die Sperrklinke infolge Verschiebens durch einen Federspeicher (3) einrastet und durch hydraulischen Druck bei gleichzeitigem Vorspannen des Federspeichers (3) ausrastet und die Sperrklinke im ausgerasteten Zustand vom hydraulischen Druck und einem Elektromagneten (5) gehalten wird, **dadurch gekennzeichnet, daß** der bestromte Elektromagnet (5) eine Verriegelungseinrichtung (13) betätigt, welche den zuvor druckbeaufschlagten Federspeicher (3) im druckbeaufschlagten und drucklosen Zustand in einer Stellung hält, in der die Sperrklinke ausgerastet ist und dabei zum Einlegen einer Verriegelung eine höhere Leistungsaufnahme und zum Aufrechterhalten der Verriegelung eine geringere Leistungsaufnahme hat und die Verriegelung so lange aufrechterhalten wird, bis der Elektromagnet (5) stromlos geschaltet wird und dabei die Verriegelungseinrichtung (13) entriegelt und die Parksperre über den Federspeicher (3) betätigt und die Sperrklinke in das Parkzahnrad eingerastet wird.

2. Parksperre nach Anspruch 1, **dadurch gekennzeichnet, daß** die von dem Elektromagneten (5) durch dessen Bestromung betätigte Verriegelungseinrichtung (13) einen Bolzen (1), welcher einen ersten zylindrischen Bereich (8) und einen sich anschließenden konischen Bereich (9) sowie einen sich anschließenden zweiten zylindrischen Bereich (10) aufweist, in axialer Richtung bewegt, wobei der konische Bereich (9) ein Verriegelungselement (4) verschiebt, welches ein bewegliches Teil (2) des Federspeichers mit einem feststehenden Teil (7) der Parksperre verbindet, wobei in der Endlage des Bolzens (1) sich das Verriegelungselement (4) auf dem zweiten zylindrischen Bereich (10) des Bolzens (1) befindet.

3. Parksperre nach Anspruch 2, **dadurch gekennzeichnet, daß** das Verriegelungselement (4) aus mindestens einer Kugel besteht, welche durch radiale Verschiebung in eine Ausnehmung (12) des feststehenden Teils (7) eingreift.

4. Parksperre nach Anspruch 2, **dadurch gekennzeichnet, daß** das Verriegelungselement (4) aus mindestens einem Bolzen besteht, welcher durch radiale Verschiebung in eine Ausnehmung (12) des feststehenden Teils (7) eingreift.

5. Parksperre nach Anspruch 3 oder 4, **dadurch gekennzeichnet, daß** die Ausnehmung (12) eine Ringnut in dem feststehenden Teil (7) ist.

## Claims

1. For automatic transmissions of motor vehicles a parking brake which on account of a control signal triggered via a control element either locks or releases the automatic transmission by means of a pawl either engaging or disengaging with a parking gear on a shaft of the automatic transmission, whereby the pawl locks as a result of being displaced by a spring accumulator (3) and is disengaged through hydraulic pressure with simultaneous preloading of the spring accumulator (3), and whereby the pawl is held in its disengaged condition by the hydraulic pressure and an electromagnet (5),
**characterized**
**in that** the active electromagnet (5) actuates a locking system (13) which holds the pressurized spring accumulator (3) in the pressurized or non-pressurized condition in a position in which the pawl is disengaged and thereby consumes more power for establishing a locking condition than for its maintenance and whereby the locking condition is maintained until the electromagnet (5) is de-energized, with the locking system (13) being released, the parking brake actuated via the spring accumulator (3) and the pawl engaged with the parking gear.

2. Parking brake according to claim 1,
**characterized**
**in that** the locking system (13) - actuated by the energized electromagnet (5) - displaces a bolt (1) in axial direction, with the bolt having a first cylindrical area (8) and an adjacent conical area (9) as well as an adjacent second cylindrical area (10), with the conical area (9) displacing a locking element (4), which connects a movable part (2) of the accumulator spring to a fixed part (7) of the parking lock, whereby in the end position of the bolt (1) the locking element (4) is located in the second cylindrical area (10) of the bolt (1).

3. Parking brake according to claim 2,
**characterized**
**in that** the locking element (4) is composed of at least one ball, which through radial displacement mates with a recess (12) of the fixed part (7).

4. Parking brake according to claim 2,
**characterized**
**in that** the locking element (4) is composed of at least one bolt, which through radial displacement engages with a recess (12) of the fixed part (7).

5. Parking brake according to claim 3 or 4,
**characterized**
**in that** the recess (12) in the fixed part (7) is an annular groove.

## Revendications

1. Mécanisme de verrouillage de stationnement pour boîtes de vitesses automatiques de véhicules automobiles, qui verrouille ou déverrouille la boîte de vitesses automatique par l'intermédiaire d'un signal d'activation déclenché par un dispositif de commande, et cela en faisant désengager ou engager un cliquet d'arrêt dans un pignon de stationnement logé sur un arbre de la boîte de vitesses automatique, sachant que le cliquet d'arrêt est encliqueté par son déplacement au moyen d'un accumulateur à ressort (3) et qu'il est désengagé par pression hydraulique, l'accumulateur à ressort étant en même temps sous précontrainte, et que le cliquet d'arrêt, lorsqu'il est désengagé, est maintenu par la pression hydraulique et par un électro-aimant (5), **caractérisé en ce que** l'électro-aimant (5) parcouru par le courant actionne un dispositif de verrouillage (13) qui maintient l'accumulateur à ressort (3) auparavant pressurisé, dans l'état pressurisé et sans pression, dans une position dans laquelle le cliquet d'arrêt soit désengagé, en ayant, pour l'engagement d'un verrou une puissance absorbée plus élevée et pour le maintien du verrouillage une puissance absorbée moins importante, et **en ce que** le verrouillage reste actif jusqu'à ce que l'électro-aimant (5) est mis hors circuit, en déverrouillant, ainsi, le dispositif de verrouillage (13), en actionnant le verrouillage de parking par l'intermédiaire de l'accumulateur à ressort (3) et en faisant engager le cliquet d'arrêt dans le pignon de stationnement.

2. Mécanisme de verrouillage de stationnement selon la revendication 1, **caractérisé en ce que** le dispositif de verrouillage (13), qui est activé par l'électro-aimant (5) parcouru par le courant, soit doté d'un axe (1) qui déplace une première partie cylindrique (8) et une partie conique adjacente (9) ainsi qu'une deuxième partie cylindrique adjacente (10) en sens axial, sachant que la partie conique (9) déplace un élément de verrouillage (4) qui lie une partie mobile (2) de l'accumulateur à ressort à une partie fixe (7) du verrouillage de parking, en sachant que, l'axe (1) étant en fin de course, l'élément de verrouillage (4) se trouve au niveau de la deuxième partie cylindrique (10) de l'axe (1).

3. Mécanisme de verrouillage de stationnement selon la revendication 2, **caractérisé en ce que** l'élément de verrouillage (4) est composé d'au moins une bille, qui s'engage par déplacement radial dans un évidement (12) de la partie fixe (7).

4. Mécanisme de verrouillage de stationnement selon la revendication 2, **caractérisé en ce que** l'élément de verrouillage (4) est composé d'au moins un axe, qui s'engage par déplacement radial dans un évidement (12) de la partie fixe (7).

5. Mécanisme de verrouillage de stationnement selon la revendication 3, **caractérisé en ce que** l'évidement (12) soit une gorge annulaire réalisée dans la partie fixe (7).
